# EUROPÄISCHE PATENTSCHRIFT

(11) **EP 1 869 921 B1**
(45) Veröffentlichungstag und Bekanntmachung des Hinweises auf die Patenterteilung: **12.08.2009**
(21) Anmeldenummer: 06723492.2
(22) Anmeldetag: 17.03.2006
(51) Int. Cl.: G06Q 20/00, G07F 7/10, H04L 29/06, H04W 12/06

(54) **VERFAHREN ZUR VERBESSERUNG DES MISSBRAUCHSSCHUTZES BEI EINER CHIPKARTE UND EINE CHIPKARTE ZUR DURCHFÜHRUNG DES VERFAHRENS**
METHOD FOR ENHANCING SECURITY AGAINST IMPROPER USE OF A SMART CARD AND SMART CARD THEREFOR
PROCEDE POUR AMELIORER LA SECURITE CONTRE L'UTILISATION ABUSIVE D'UNE CARTE A PUCE ET CARTE A PUCE POUR REALISER CE PROCEDE

(30) Priorität: 31.03.2005 DE 102005014639
(43) Veröffentlichungstag der Anmeldung: 26.12.2007
(73) Patentinhaber: T-Mobile International AG, 53227 Bonn (DE)
(72) Erfinder: KRAMARZ-VON KOHOUT, Gerhard, 53113 Bonn (DE); MOHRS, Walter, 53123 Bonn (DE)
(74) Vertreter: Riebling, Peter
(86) Internationale Anmeldenummer: PCT/EP2006/002448
(87) Internationale Veröffentlichungsnummer: WO 2006/102999

(56) Entgegenhaltungen:
- EP-A- 1 170 969
- EP-A- 1 478 196
- US-A- 5 940 773

## Beschreibung

Die Erfindung betrifft ein Verfahren zur Verbesserung des Missbrauchsschutzes bei einer Chipkarte und eine zugehörige Chipkarte, gemäß dem Oberbegriff der unabhängigen Patentansprüche, und betrifft insbesondere eine spezielle Chipkarte, nämlich das integrierte Teilnehmeridentitätsmodul (Subscriber Identity Module SIM) für den Mobilfunk.

Im Mobilfunk ist das Kundenverhältnis durch die Ausgabe einer speziellen Chipkarte, der sogenannten SIM (Subscriber Identity Module - Teilnehmeridentitätsmodul) an den Benutzer gekennzeichnet. Die SIM enthält alle Daten, die zur eindeutigen Identifizierung des mobilen Telekommunikationsanschlusses des Benutzers erforderlich sind.

Auch die Entgeltberechnung im Mobilfunknetz basiert auf der eindeutigen Identifizierung des Benutzers, die in der Regel vor jeder Nutzung des Netzes in einer kryptographisch abgesicherten Prozedur, der Authentisierung der SIM gegenüber dem Netz, erfolgt. Die für die Authentisierung erforderlichen kryptographischen Algorithmen und Schlüssel sind auf der SIM geschützt gespeichert.

Die SIM ist grundsätzlich in jedem beliebigen mobilen Endgerät nutzbar.

Um die missbräuchliche Nutzung der SIM durch unbefugte Dritte zu verhindern, kann ein Benutzer seine SIM mit einer nur ihm bekannten PIN (Personal Identification Number - persönliche Identifikationsnummer) schützen. Die PIN stellt eine Authentisierung des Nutzers gegenüber der SIM dar. Durch eine Eingabe der richtigen PIN kann eine SIM eine Authentisierung gegenüber dem Netz durchführen.

Die PIN ist eine 4 bis 8-stellige Zahl, die vom Benutzer eingegeben werden muss, wenn das mobile Endgerät eingeschaltet wird. Wenn ein unbefugter Dritter die PIN nicht kennt, so kann er ein mobiles Endgerät mit dieser SIM nicht nutzen. Nach drei aufeinander folgenden Fehleingaben, d.h. nach drei aufeinander folgenden Eingaben einer falschen PIN sperrt sich die SIM selbsttätig und ist solange nicht nutzbar, bis der zur jeweiligen SIM gehörige PUK (Personal Unblocking Code - persönlicher Entsperrungsschlüssel) korrekt eingegeben wird.

Der PUK ist ein spezieller 8-stelliger Entsperrungsschlüssel und ist im Allgemeinen nur dem rechtmäßigen Besitzer der Karte bekannt.

Solange der rechtmäßige Besitzer der SIM die zugehörige PIN und den zugehörigen PUK vertraulich behandelt, kann er recht sicher sein, dass ein unberechtigter Dritter die zur Authentisierung des Nutzers gegenüber der Karte notwendige geheime Zugangsinformation nicht kennt, und somit die SIM nicht, und im Besonderen nicht auf Kosten des rechtmäßigen Besitzers genutzt werden kann.

Da die PIN 4 bis 8-stellig und der PUK 8-stellig sind, bestehen recht geringe Möglichkeiten in Abhängigkeit von der Länge der PIN bzw. des PUK für den unberechtigten Dritten, die PIN bzw. den PUK zu erraten, da nach drei aufeinander folgenden Fehleingaben der PIN bzw. zehn aufeinander folgenden Fehleingaben des PUK die SIM selbsttätig gesperrt ist, und auf diese Weise ein recht guter Missbrauchsschutz gewährleistet ist.

Der PIN-Schutzmechanismus greift allerdings nicht, wenn ein unberechtigter Dritter ein mobiles Endgerät mit aktivierter SIM, bei dem die PIN also bereits eingegeben worden ist, an sich nimmt.

Der unberechtigte Dritte könnte nunmehr so lange auf Kosten des rechtmäßigen Benutzers telefonieren, bis der rechtmäßige Benutzer den Verlust der SIM bemerkt und die SIM an Hand der Kartennummer oder seiner Rufnummer beim Netzbetreiber sperren lässt.

Der Netzbetreiber setzt in einem solchen Fall den Status der SIM in den zugehörigen Datenbanken, nämlich im Home Location Register (HLR) auf "gesperrt". Das Netz liefert dann keine für die Authentisierung erforderlichen Parameter mehr, die bereits generierten und im Netz, nämlich im Visitors Location Register (VLR) verteilten Parameter werden deaktiviert. Eine weitere Nutzung der SIM ist nach der Deaktivierung der Parameter für den rechtmäßigen Besitzer oder für einen unberechtigten Dritten nicht mehr möglich.

Die Zeitspanne zwischen Verlust/Diebstahl und der vollzogenen Kartensperre in den Systemen des Mobilfunknetzes kann recht groß sein, da eventuell der rechtmäßige Besitzer den Verlust/Diebstahl seines Handys erst nach einiger Zeit bemerkt und er dann zunächst keine Möglichkeit hat zu telefonieren, um den Netzbetreiber über den Verlust/Diebstahl des Handys zu informieren.

Darüber hinaus weisen die internen Prozesse des Netzbetreibers zur Initiierung der Kartensperre auch einen gewissen Zeitbedarf auf, da die Kartensperre letztendlich im HLR und im betroffenen VLR aktiv geschaltet sein muss.

Der Aufwand seitens des Netzbetreibers ist beträchtlich, da rund um die Uhr geschultes Personal allein für die Customer Care - Prozesse (Prozesse zur Kundenpflege) bereitstehen muss.

Neben den kartenbasierten Sicherheitsmechanismen sind endgerätebasierte Sicherheitsmechanismen bekannt. So wird zum Beispiel der standardisierte SIM-Lock vom Mobilfunknetzbetreiber oder Provider dazu eingesetzt, die Funktion eines Endgerätes nicht mit beliebigen SIMs, sondern nur mit allen SIMs bzw. einer Gruppe von SIMs bzw. einer einzigen SIM eines einzelnen Netzbetreibers zu gewährleisten. Der SIM-Lock kann aufgehoben werden durch die Eingabe eines Entsperrcodes. Der Entsperrcode wird vom Hersteller des Endgerätes bereitgestellt.

Darüber hinaus bieten manche Endgerätetypen auch dem Nutzer selbst die Möglichkeit, sein Endgerät über eine besondere Geheimzahl an eine einzelnen SIM zu binden. Hierzu muss der Nutzer eine z.B. fünfstellige Endgeräte-PIN definieren, die dann einzugeben ist, wenn das Endgerät mit einer anderen SIM genutzt werden soll.

Bei aktiviertem SIM Lock bzw. aktivierter Endgeräte-PIN ist zunächst ein zusätzlicher Missbrauchsschutz gegeben, weil grundsätzlich ein unbefugter Dritter entweder die PIN der eingelegten SIM oder aber- in Verbindung mit einer anderen, durch die aktivierte Sperre erfassten SIM - die Endgeräte-PIN des regulären Nutzers bzw. den Entsperrcode des Herstellers kennen muss, wenn er das Endgerät weiterhin nutzen möchte.

Allerdings erweist sich dieser Missbrauchsschutz über eine Endgeräte-PIN bzw. über SIM-Lock letztlich alls höchst mangelhaft, weil die Endgeräte-PIN bzw, der Entsperrcode in der Software des Endgerätes hinterlegt sind und somit die Schutzmöglichkeiten seitens des Herstellers begrenzt sind. In der Tat finden sich im Internet für viele gängige Endgerätetypen softwarebasierte Tools, welche auch dem technischen Laien das Zurücksetzen der Endgeräte-PIN bzw. des SIM-Locks erlauben. Werden die Endgeräte-PIN bzw. der SIM-Lock zurückgesetzt, so ist das Endgerät wieder mit jeder beliebigen SIM nutzbar.

Der endgerätebasierte Schutzmechanismus mittels einer Endgeräte-PIN bzw. eines SIM-Locks greift darüber hinaus ebenso wie der kartenbasierte Schutzmechanismus mittels PIN nicht, wenn, wie bereits beschrieben, ein unberechtigter Dritter ein mobiles Endgerät mit aktivierter SIM an sich nimmt.

EP 1 478196 A2 beschreibt Mechanismen, die die Ereignisse:
"Benutzung eines neuen Endgerätes mit einer Karte - Ereignis wird erkannt durch die Karte" bzw. "Benutzung einer neuen Karte im Endgerät - Ereignis wird erkennt durch das Endgerät" detektieren und auswerten. Beide Verfahren machen sich zunutze bzw. setzen voraus, dass die Einheit, dessen Wechsel erkennt werden soll, eine eindeutige Identifizierungsnummer besitzt.

Im Falle, dass die Karte die Einheit ist, die den Wechselvorgang detektieren soll, stehen Funktion bzw. Kommandos zur Verfügung, die im entsprechenden Kartenstandard der ETSI anwendungsgerecht spezifiziert sind. Für den Fall, dass das Endgerät detektieren soll, erfordert dies höheren proprietären Aufwand, da die Anwendungsumgebung aufgrund fehlender bzw. unzureichender Standards nicht entsprechend aufbereitet ist.

Ein Schutzmechanismus gegen missbräuchliche Nutzung einer SIM wird hier nicht erwähnt.

EP 1 170 969 A1 beschreibt ein Verfahren und eine Vorrichtung, die sich im Kern die Falscheingabe einer PIN im Endgerät zunutze macht, diesen Vorgang erkennt und daraufhin verschiedene funktionale Handlungsoptionen anbietet. Da ausschließlich Implementierungen im Endgerät beschrieben werden, erfordert dies von der Chipkarte keinerlei Sonderfunktionalität. Insbesondere greift der beschriebene Mechanismus nur bei Fehleingabe einer PIN, was aber zwingend die Aktivierung der PIN Prüfung voraussetzt.

Aufgabe der vorliegenden Erfindungsidee ist es, einen Schutzmechanismus gegen die missbräuchliche Nutzung einer Chipkarte, insbesondere einer SIM, derart weiterzubilden, dass dieser auch dann aktiv wirkt, wenn ein unberechtigter Dritter ein mobiles Endgerät im eingeschalteten Zustand, also mit aktivierter SIM an sich nimmt, wobei entweder die Standard-PIN der SIM bereits eingegeben oder die Standard-PIN deaktiviert ist.

Diese Aufgabe wird erfindungsgemäß durch die technische Lehre der unabhängigen Patentansprüche gelöst, auf deren Inhalt an dieser Stelle verwiesen wird.

Vorteilhafte Ausgestaltungen und Weiterbildungen der Erfindung ergeben sich aus den abhängigen Patentansprüchen, auf deren Inhalt an dieser Stelle verwiesen wird.

Die Aufgabenstellung wird dadurch gelöst, dass der Schutz für den regulären Nutzer gegen einen Missbrauch der Chipkarte durch Dritte erfindungsgemäß dadurch erhöht wird, dass der reguläre Nutzer eine nur ihm bekannte PIN nicht nur wie bisher beim Einschalten seines Endgerätes eingeben kann, sondern regelmäßig auch bei eingeschaltetem Endgerät eingeben muss, um weiterhin Zugriff auf die Funktionen der Chipkarte zu erhalten.

Diese erfindungsgemäße neue PIN wird im folgenden der Einfachheit halber als "Aktivitäts-PIN" (A-PIN) bezeichnet.

Wesentliche Vorteile der vorliegenden Erfindungsidee liegen sowohl für den Benutzer als auch für den Netzbetreiber vor.

Wesentliche Vorteile für den Benutzer sind
- dass dieser lediglich einen relativ geringen finanziellen Schaden bei Verlust des Handys hat,
- dass dieser für ein hohes Sicherheitsbedürfnis ein angemessenes Angebot erhält,
- dass die Sperre eines Handys automatisch erfolgt, ohne weitere Funktionsausübung des Benutzers.

Wesentliche Vorteile aus der Sicht des Netzbetreibers liegen
- in der einfachen Realisierbarkeit,
- in der Steigerung der Kundenzufriedenheit, generell und insbesondere bezogen auf das Segment der Benutzers mit hohem Sicherheitsbedürfnis
- in der Senkung des CC-Aufwandes.

Nachfolgend ist die Beschreibung einer möglichen Implementierung der Erfindungsidee beispielhaft aufgeführt.

Neben der Standard-PIN, mittels derer der Zugang zu Datenfeldern und Applikationen einer SIM standardkonform verwaltet wird, wird ein zusätzlicher Zugangscode neben eigenen Accesskontrollmechanismen eingeführt. Dieser neue Code heißt "Aktivitäts-PIN" (A-PIN). Die A-PIN steht in einem klaren hierarchischen Verhältnis zur Standard-PIN; so kann die A-PIN nur verwendet oder geändert werden, wenn die Standard-PIN vorher erfolgreich bestätigt wurde. Gleichfalls ist die A-PIN ohne Bedeutung, wenn die Karte gesperrt ist.

Die vorliegende Erfindung wird anhand der beiliegenden Figuren näher erläutert, wobei sich hieraus erfindungsgemäße Merkmale auch aus der Kombination einzelner Merkmale ergeben.

Hierbei zeigen:

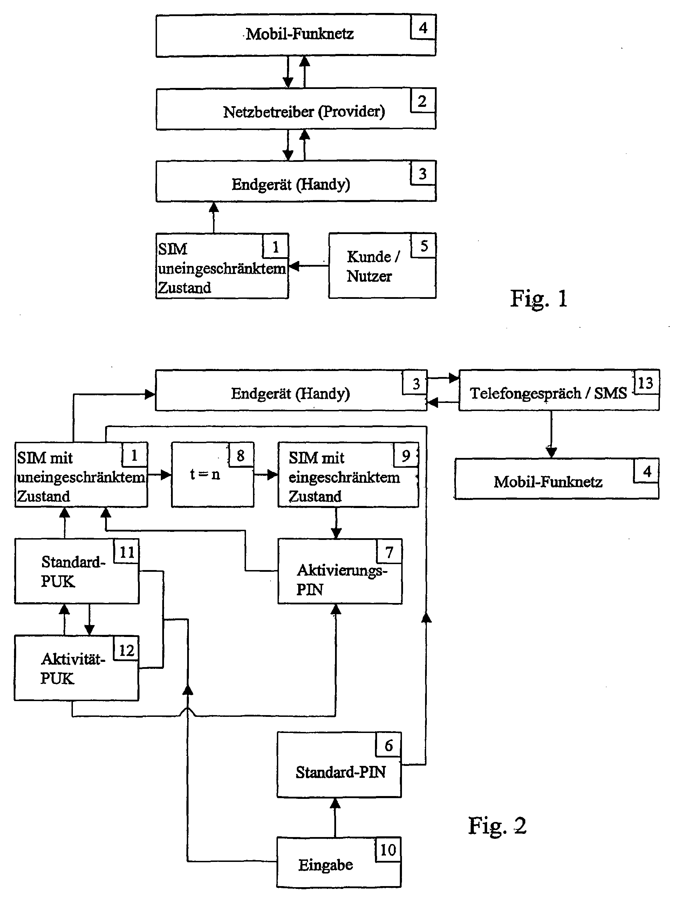

- Figur 1:: eine Darstellung eines Endgerätes mit einer SIM gemäß dem Stand der Technik,
- Figur 2:: eine Darstellung eines erfindungsgemäßen Endgerätes mit einer optimierten SIM zum Schutz gegen Missbrauch,
- Figur 3:: ein Flussdiagramm des erfindungsgemäßen Verfahrensablaufs.

Kern der Erfindungsidee ist es, dass nach Ablauf eines gewissen Zeitintervalls 8 oder nach Eintreten eines gewissen Ereignisses die SIM in einen "eingeschränkten Betriebszustand" übergeht, sich sozusagen "sperrt". Dieses vorbenannte Sperren ist nicht mit dem nach den relevanten ETSI-und 3GPP-Spezifikationen ausgeführten "Sperren einer SIM/UICC" gleichzustellen, kann jedoch in einer speziellen Ausführungsform mit diesem übereinstimmen oder in einer anderen abweichenden Ausführungsform mit stärkeren oder schwächeren karteninternen Zugriffsregeln realisiert werden. "Karteninterne Zugriffsregeln" beziehen sich hier auf Zugriffe auf karteninterne Daten und Funktionalitäten.

So erlaubt die SIM 1 in dem eingeschränkten Betriebszustand 9 zum Beispiel keinen Zugriff auf die in ihr gespeicherten Daten, oder Teilen davon, und führt somit beispielsweise den Authentifikationsalgorithmus nicht aus. Jedoch sind ankommende Gespräche in diesem Status gegebenenfalls noch möglich.

Dieser eingeschränkte Betriebszustand 9 wird erst nach Eingabe der Aktivitäts-PIN 7 wieder aufgehoben.

Durch ein Aus- und Einschalten des Endgerätes 3 ist der eingeschränkte Betriebszustand 9 der SIM wieder außer Kraft zu setzen. Dies bedeutet, dass man durch Eingabe der Standard-PIN 6 die SIM 9 wieder freischalten kann.

Eines besonderen PUK (Personal Unblock Code) 11 für die Aktivitäts-PIN 7 bedarf es insofern nicht. Jedoch wäre dies optional als Ausprägung durchführbar, wobei dann der "Aktivitäts-PUK (A-PUK)" 12 identisch dem Standard-PUK 11 sein kann. Aber auch ein eigener Aktivitäts-PUK 12, welcher im Wert identisch oder nicht identisch mit dem Standard-PUK 11 ist, ist verwendbar.

Die SIM-Karte 1 tritt aufgrund von einem oder mehreren der nachfolgenden Abläufe in den eingeschränkten Betriebszustand 9 ein:
- nach Ablauf eines Zeitintervalls 8 oder Erreichen einer absoluten Zeit oder
- nach Eintritt eines definierten direkten oder verzögerten Ereignisses oder
- nach der n-maligen Wiederholung eines Ereignisses oder dem eintreffen einer bestimmten Ereignissequenz

Da die SIM-Karte grundsätzlich den Übergang in den oder aus dem eingeschränkten Betriebszustand 9 kontrollieren soll, muss sie auch verlässliche Methoden aufweisen, welche den Übergang auslösen.

Technisch ist dies durch den heutigen Stand der Technik basierend auf internationalen Kartenstandards umsetzbar. Dabei kommen vorwiegend der ETSI/3GPP SIM Toolkit Standard (SAT/USAT/CAT) sowie auch Mechanismen, die durch die Programmierung von Kartenapplikationen vornehmlich nach dem JAVA Standard ermöglicht werden, zum Einsatz.

Ein erster Eintritt der SIM-Karte 1 in den eingeschränkten Betriebszustand 9 liegt vor, wenn die SIM 1 Zeit und Zeitintervalle 8 mittels SIM-Toolkit vom Endgerät 3 erfragen kann, wie zum Beispiel Timer Management und Local Information (Time) gemäß dem SIM-Toolkit-Standard.

Ein weiterer Eintritt der SIM-Karte 1 in den eingeschränkten Betriebszustand 9 liegt vor, wenn das Lesen eines bestimmten Datenfeldes oder die Ausführung des Authentifikationsalgorithmus ein internes Ereignis generiert.

Ebenso kann die Karte durch Aktivieren von CALL CONTROL nach dem ETSI Standard eine Kontrolle über abgehende Rufe bekommen.

Zusätzlich besteht nach dem-Toolkit Standard die Möglichkeit, sich kartenseitig über den Beginn und das Ende eines Telefongesprächs oder einer SMS informieren zu lassen (Event Handling).

In allen drei Realisierungen wird letztendlich die Ausführung eines Programms, also beispielsweise einer Kartenapplikation oder einer Routine innerhalb des Betriebssystems, ausgelöst, welches den Übergang in den eingeschränkten Betriebszustand 9 auslöst.

Ein weiterer Eintritt der SIM-Karte in den eingeschränkten Betriebszustand 9 liegt vor, wenn die Ausführung des STATUS Kommandos registriert wird, welches vom Endgerät 1 gemäß Standard im Idle-Mode in regelmäßigen Abständen zur SIM-Karte 1 geschickt wird und dies nach n-maliger Ausführung zur Auslösung eines Programms führt.

Welche Bedingungen zum Eintritt in den eingeschränkten Betriebszustand 9 führen und wie sich dieser Betriebszustand konkret auswirkt, wird vom Netzbetreiber 2 individuell definiert.

In einer sehr restriktiven Variante löst die SIM-Karte 1 nach Eintreten des Ereignisses beispielsweise einen (Soft-) Reset des Endgerätes 3 aus (RESET nach Toolkit Standard) und impliziert somit einen stark eingeschränkten Betriebszustand 9: Der Status des Endgeräts 3 ist dann wie nach dem Einschalten und vor Überprüfung der Standard-PIN 6. Nicht einmal ankommende Gespräche sind nunmehr möglich. In diesem Fall ist also vor jeder weiteren Nutzung die Eingabe der Standard-PIN erforderlich.

In einer optionalen Ausführung können dem Benutzer 5 auch vorbestimmte Einstellvarianten zur Verfügung werden.

So ist es zum Beispiel möglich, dass der Benutzer 5 das zeitliche Intervall 8 oder ein Ereignis, wie zum Beispiel jeder dritte abgehende Anruf, vorgeben kann, zu dem die A-PIN 7 erneut einzugeben ist.

Allgemein können je nach Ausführung dem Benutzer 5 verschiedene Wahl- und Eingriffsmöglichkeiten ermöglicht werden. Steuerbar sind diese zum Beispiel über ein auf der SIM-Karte 1 basiertes SIM Toolkit-Menu, welches im Endgerät 3 verfügbar ist und mittels dessen der Benutzer 5 seine Parameter einstellen kann.

Insbesondere die nachfolgenden Parameter sind vom Benutzer 5 individuell einstellbar.
- A-PIN 7 an oder aus (Ab- und Anschalten des kompletten Mechanismus)
- Ändern der A-PIN 7
- Definition des Ereignisses zum Übergang in den eingeschränkten Betriebszustand 9
- Definition des eingeschränkten Betriebszustands 9, wobei zum-beispiel keine abgehenden, jedoch ankommende Rufe geführt werden können, oder nur noch genau ein abgehendes oder ankommendes-Gespräch 13 geführt werden kann, oder ein kompletter Reset durchgeführt wird.

Während die Erzeugung eines Ereignisses, der Übergang in den eingeschränkten Betriebszustand 9 sowie die Zurücknahme des eingeschränkten Betriebszustands lokal in einem Endgerät 3 und SIM-Karte 1 ablaufen, kann in einer weiteren Ausführung auch eine Benachrichtigung des Netzbetreibers beispielsweise mittels eines Anrufes 13, mittels Versendens einer SMS-Textnachricht 13 oder auch mittels Versendens eines USSD-Codes 13 (GSM-Protokoll USSD = Unstructured Supplementary Service Data, z.B. "**123#") an den Netzbetreiber 2 vorgesehen werden.

Diese Benachrichtigung 13 informiert so über den Eintritt in den eingeschränkten Betriebszustand, den auslösenden Grund, den aktuellen Standort des Endgerätes 3 und dergleichen. Der Netzbetreiber 2 kann somit entsprechende Vorkehrungen wie zum Beispiel "gelben Alarm" zur Beobachtung der Situation oder "roten Alarm" zum sofortigen Starten von Aktivitäten oder "Rückfrage" beim Benutzer treffen. Die technischen Voraussetzungen hierfür sind wiederum mit SIM Toolkit und GSM-OTA Mechanismen gegeben.

Die kartenseitige Realisierung kann über die Implementierung einer Kartenapplikation - bevorzugt JAVA - erfolgen, wobei nachfolgende Funktionen vorausgesetzt werden.

Die Applikation ist in der Lage, Kartenzugriffsrechte zu administrieren sowie mittels SIM-Toolkit-Kommandos mit dem Endgerät 3 zu kommunizieren. Kartenseitig entspricht dies dem Stand der heutigen Technik.

Heutige Endgeräte 3 unterstützen in der Regel den seit vielen Jahren bekannten SIM-Toolkit-Standard.

In einer Ausführungsform zur Funktionalität, in der "Remote"-Mechanismen zum Einsatz kommen, ist die Unterstützung von OTA (over-the-air) erforderlich.

Auch dies ist sowohl Stand der Technik als auch Standardfunktionalität bei SIM-Karten 1 und Endgeräten 3.

Vorzugsweise ist die Umsetzung der hier beschriebenen Funktionalität alleine mit der Programmierung einer Kartenapplikation zu bewerkstelligen. Diese Applikation (Applet) wird bereits im Rahmen der Kartenproduktion (Personalisierung) bereitgestellt, kann jedoch auch später mittels OTA auf die Karte übertragen werden.

Die Verlässlichkeit dieses SIM-basierten Diebstahlschutzes ist dank des hohen Sicherheitslevels der SIM-Karten 1 weitestgehend garantiert. Insofern ist diese Erfindung vorteilhaft gegenüber endgerätebasierten Lösungen.

Je nach Ausführung hat der Nutzer die Möglichkeit, die Standard-PIN zu deaktivieren. Bei eingerichteter Aktivitäts-PIN sollen zumindest einige der erfindungsgemäßen Maßnahmen auch bei deaktivierter Standard-PIN wirksam sein können.

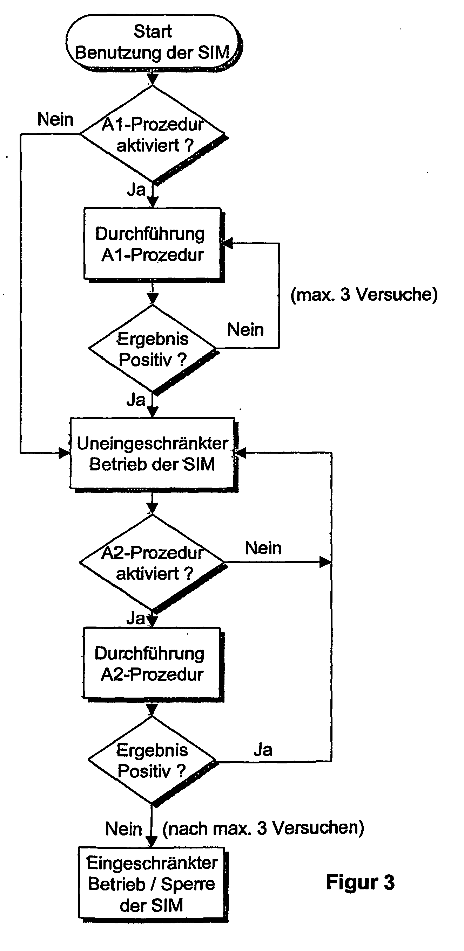

Figur 3 zeigt ein Flussdiagramm des erfindungsgemäßen Verfahrenablaufs wie er vorzugsweise zur Anwendung kommt. Je nach den vordefinierten Einstellungen des Benutzers müssen zum Betrieb des Teilnehmeridentitätsmoduls die erste und/oder die zweite Authentisierungsprozedur durchlaufen werden. Je nach dem Ergebnis der durchgeführten Authentizitätsprüfungen wird dem Benutzer ein uneingeschränkter oder ein eingeschränkter Zugriff auf die Daten und funktionen des Teilnehmeridentifikationsmoduls gestattet oder das Tellnehmeridentifikationsmodul vollständig gesperrt. Die zweite Authentisierungsprozedur wird nur durchgeführt, wenn Sie vom Benutzer aktiviert ist. In diesem Fall wird die zweite Authentisierungsprozedur ausgeführt, wenn eine vordefinierte Einflussgröße einen vordefinierten Schwellwert erreicht, beispielsweise wenn eine bestimmte Zeitspanne abgelaufen ist oder wenn ein bestimmtes Ereignis eintritt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

### Bezugszeichenliste und Abkürzungen

1. Subscriber Identity Module (SIM) im uneingeschränkten Betriebszustand
2. Netzbetreiber (Provider)
3. Endgerät (Mobiltelefon)
4. Mobilfunknetz
5. Benutzer
6. Standard-PIN
7. Aktivitäts-PIN (A-PIN)
8. Zeit oder Zeitintervall, t = n (in Sekunden)
9. Subscriber Identity Module (SIM) im eingeschränkten Betriebszustand
10. Eingabe
11. Standard PUK
12. Aktivitäts-PUK
13. Telefongespräch / Textnachricht (SMS: Short Message Service) / USSD (Unstructured Supplementary Service Data)

A1-Prozedur erste Authentisierungsprozedur
A2-Prozedur zweite Authentisierungsprozedur

## Patentansprüche

1. Verfahren zur Verbesserung des Missbrauchsschutzes bei einer Chipkarte in Form eines Teilnehmeridentitätsmoduls SIM (1) für den Einsatz in Mobilkommunikationsendgeräten (3), wobei eine erste Authentisierungsprozedur (A1) vorgesehen ist, die wahlweise vor jeder Benutzung des Teilnehmeidentitätsmoduls (1) durchgeführt wird und zur Authentizitätsprüfung eines Benutzers (5) gegenüber dem Teilnehmeridentitätsmodul (1) dient,
**dadurch gekennzeichnet,**
**dass** wahlweise eine zweite Authentisierungsprozedur (A2) vorgesehen ist, die zur Authentizitätsprüfung des Benutzers (5) gegenüber dem Teilnehmeridentitätsmodul (1) dient und automatisch und wiederholt während der Benutzung des Teilnehmeridentitätsmoduls (1) durchgeführt wird.

2. Verfahren nach Anspruch 1, **dadurch gekennzeichnet, dass** die erste Authentisierungsprozedur (A1) eine Eingabe eines ersten Zugangscodes (6) durch den Benutzer erfordert, der durch das Telinehmeridentitätsmodul (1) auf Richtigkeit überprüft wird, wobei nur bei positivem Überprüfungsergebnis ein Zugriff auf das Teilnehmeridentitätsmodul freigegeben wird.

3. Verfahren nach Anspruch 2, **dadurch gekennzeichnet, dass** der erste Zugangscode (6) eine Standard-PIN im herkömmlichen Sinne ist.

4. Verfahren nach einem der vorhergehenden Ansprüche, **dadurch gekennzeichnet, dass** die zweite Authentisierungsprozedur (A2) in bestimmten Zeitabständen eine wiederholte Eingabe eines zweiten Zugangscodes (7) durch den Benutzer erfordert, der durch das Teilnehmeridentitätsmodul (1) auf Richtigkeit überprüft wird, wobei nur bei positivem Überprüfungsergebnis ein weiterer uneingeschränkter Zugriff auf das Teilnehmeridentitätsmodul (1) freigegeben wird.

5. Verfahren nach Anspruch 4, **dadurch gekennzeichnet, dass** der zweite Zugangscode (7) eine Standard-PIN im herkömmlichen Sinne, hier in der Funktion einer "Aktivitäts-PIN", ist.

6. Verfahren nach einem der vorhergehenden Anspruche, **dadurch gekennzeichnet, dass** zunächst die erste Authentisierungsprozedur (A1) durchgeführt werden muss bevor die zweite Authentisierungsprozedur (A2) durchgeführt wird.

7. Verfahren nach einem der vorhergehenden Ansprüche, **dadurch gekennzeichnet, dass** die zweite Authentisierungsprozedur (A2) unabhängig von der ersten Authentisierungsprozedur (A1) durchgeführt wird.

8. Verfahren nach einem der vorhergehenden Ansprüche, **dadurch gekennzeichnet, dass** die Durchführung der zweiten Authentisierungsprozedur (A2) vom Benutzer (5) wahlweise aktivierbar/deaktivierbar ist.

9. Verfahren nach Anspruch 8, **dadurch gekennzeichnet, dass** der Zugang zur wahlweisen Aktivierung / Deaktivierung der zweiten Authentisierungsprozedur (A2) nur nach erfolgreicher Durchführung der ersten Authentisierungsprozedur (A1) freigegeben wird.

10. Verfahren nach einem der vorhergehenden Ansprüche, **dadurch gekennzeichnet, dass** das Teilnehmeridentitätsmodul (1) von einem uneingeschränkten Betriebszustand eigenkontrolliert und in Abhängigkeit von dem Ergebnis der zweiten Authentisierungsprozedur (A2) und/oder anderer vordefinierter Einflussgrößen in einen zweiten eingeschränkten Betriebszustand (9) wechselt.

11. Verfahren nach Anspruch 10, **dadurch gekennzeichnet, dass** oder eingeschränkte Betriebszustand des Teilnehmeridentitätsmoduls (9) durch vordefinierte Regeln für Zugriffe auf Daten und funktionen des Teilnehmeridentitätsmoduls **gekennzeichnet** ist.

12. Verfahren nach einem der Ansprüche 10 oder 11, **dadurch gekennzeichnet, dass** der eingeschränkte Betriebszustand des Teilnehmeridenbtäismoduls (9) und /oder die mit dem zweiten Authentisierungsverfahren (A2) verbundenen Zugriffsmechanismen durch Ein- und Ausschalten des mit dem Teilnehmeridentitätsmodul betriebenen Endgeräts (3) deaktivierbar sind.

13. Verfahren nach Anspruch 4, **dadurch gekennzeichnet, dass** der bei der zweiten Authentisierungsprozedur (A2) verwendete Zugangscode (7) mittels eines vordefinierten Aktivitäts-PUK Personal Unblock Code, (12) entsperrbar ist.

14. Verfahren nach einem der Ansprüche 10 bis 12, **dadurch gekennzeichnet, dass** Übergang vom uneingeschränkten in den eingeschränkten Betriebszustand mittels Kartenapplikationen nach einem Java Standard ausgelöst wird.

15. Verfahren nach einem der Ansprüche 10 bis 12 oder 14, **dadurch gekennzeichnet, dass** das Teilnehmeridentitätsmodul ausgelöst durch eine oder mehrere der folgenden Einflussgrößen in seinen eingeschränkten Betriebszustand wechselt, wobei die Art- und Weise der Einschränkung individuell festlegbar ist:
- Ablauf eines Zeitintervalls
- Erreichen einer absoluten Zeit und/oder Zeit
- Eintritt eines direkten oder verzögerten Ereignisses
- n-malige Wiederholung eines Ereignisses
- Eintreffen einer Ereignissequenz.

16. Verfahren nach einem der Ansprüche 10 bis 12, 14 oder 15, **dadurch gekennzeichnet, dass** der eingeschränkte Betriebszustand des Teilnehmeridentitätsmoduls (9) durch eine oder mehrere der folgende Funktionen definiert ist:
- Sperren aller Gespräche
- Sperren abgehender Gespräche
- Sperren ankommender Gespräche
- Sperren von SMS, EMS, MMS und / oder USSD-Code
- Sperren sonstiger Datenverbindungen
- Sperren aller Funktionen der SIM
- Automatisches Absenden einer Nachricht an einen vorherbestimmten Empfänger über den Grund bzw. aus Anlass der Auslösung des eingeschränkten Betriebszustandes und/oder über den aktuellen Standort des Endgerätes (3).

17. Verfahren nach einem der vorhergehenden Ansprüche, **dadurch gekennzeichnet, dass** die Durchführung und Funktion der zweiten Authentisierungsprozedur (A2) durch folgende, vom Benutzer (5) festlegbar Parameter steuerbar ist:
- Ein- und Ausschalten der Aktivitäts-PIN (7)
- Ändern der Aktivitäts-PIN (7)
- Definieren des Ereignisses für den Übergang in den eingeschränkten Betriebszustand
- Definieren der verfügbaren Funktionen im eingeschränkten Zustand
- Definieren der Art und des Inhalts der Nachricht an einen vorherbestimmten Empfänger über den Grund bzw. aus Anlass der Auslösung des eingeschränkten Betriebszustands.

18. Verfahren nach Anspruch 17, **dadurch gekennzeichnet, dass** die Nachricht per Anruf oder per Kurznachrichtendienst SMS, EMS, MMS oder über einen USSD-Code versandt wird.

19. Chipkarte in Form eines Teilnehmeridentitätsmoduls SIM (1) für den Einsatz in Mobilkommunikationsendgeräten (3), mit Mitteln zur Durchführung einer ersten Authentisierungsprozedur (A1), die wahlweise vor jeder Benutzung des Teilnehmeridentitätsmoduls durchgeführt wird und zur Authentizitätsprüfung eines Benutzers (5) gegenüber dem Teilnehmeridentitätsmodul (1) dient, **gekennzeichnet durch** Mitteln zur wahlweisen Durchführung einer zweiten Authentisierungsprozedur (A2), die zur Authentizitätsprüfung des Benutzers (5) gegenüber dem Teilnehmeridentitätsmodul (1) dient und automatisch und wiederholt während der Benutzung des Teilnehmeridentitätsmoduls(1) durchgeführt wird.

20. Chipkarte nach Anspruch 19, **dadurch gekennzeichnet, dass** der erste Authentisierungsprozedur (A1) ein erster Zugangscode (6) zugeordnet ist.

21. Chipkarte nach einem der Ansprüche 19 oder 20, **dadurch gekennzeichnet, dass** der zweiten Authentisierungsprozedur (A2) ein zweiter Zugangscode (7) zugeordnet ist.

22. Chipkarte nach einem der Ansprüche 20 bis 21, **dadurch gekennzeichnet, dass** der erste und der zweite Zugangscode (6; 7) jeweils aus einer persönlichen Identifikationsnummer PIN bestehen.

23. Chipkarte nach einem der Ansprüche 20 bis 22, **dadurch gekennzeichnet, dass** der erste und der zweite Zugangscode (6; 7) identisch sind.

24. Chipkarte nach einem der Ansprüche 19 bis 23, **dadurch gekennzeichnet, dass** sie einen uneingeschränkten und einen eingeschränkten Betriebszustand aufweist, wobei der aktuelle Betriebszustand von dem Ergebnis der ersten Authentisierungsprozedur und/oder der zweiten Authentisierungsprozedur (A2) und/oder anderer vordefinierter Einflussgrößen anhängt.

25. Chipkarte nach Anspruch 24, **dadurch gekennzeichnet, dass** der eingeschränkte Betriebszustand des Teilnehmeridentitätsmoduls (9) durch vordefinierte Regeln für Zugriffe auf Daten und Funktionen des Teilnehmeridentitätsmoduls **gekennzeichnet** ist.

## Claims

1. Method for improving protection against improper use in a chip card in the form of a subscriber identification module SIM (1) for use in mobile communications terminal devices (3), wherein a first authentication procedure (A1) is provided which is optionally carried out prior to each use of the subscriber identification module (1) and serves as an authenticity test of a user (5) with respect to the subscriber identification module (1), **characterised in that** optionally a second authentication procedure (A2) is provided which serves as an authenticity test of the user (5) with respect to the subscriber identification module (1) and is carried out automatically and repeatedly during use of the subscriber identification module (1).

2. Method according to claim 1, **characterised in that** the first authentication procedure (A1) requires input of a first access code (6) by the user which is checked for correctness by the subscriber identification module (1), wherein only when the result of checking is positive is clearance given for access to the subscriber identification module.

3. Method according to claim 2, **characterised in that** the first access code (6) is a standard PIN as usually understood.

4. Method according to any of the preceding claims, **characterised in that** the second authentication procedure (A2) requires repeated input at certain intervals of time by the user of a second access code (7) which is checked for correctness by the subscriber identification module (1), wherein only when the result of checking is positive is clearance given for further unrestricted access to the subscriber identification module (1).

5. Method according to claim 4, **characterised in that** the second access code (7) is a standard PIN as usually understood, in this case in the function of an "activity PIN"

6. Method according to any of the preceding claims, **characterised in that** the first authentication procedure (A1) must first of all be carried out before the second authentication procedure (A2) is carried out.

7. Method according to any of the preceding claims, **characterised in that** the second authentication procedure (A2) is carried out independently of the first authentication procedure (A1).

8. Method according to any of the preceding claims, **characterised in that** the performance of the second authentication procedure (A2) is optionally activatable/deactivatable by the user (6).

9. Method according to claim 8, **characterised in that** access to the optional activation/deactivation of the second authentication procedure (A2) is given clearance only after successful performance of the first authentication procedure (A1).

10. Method according to any of the preceding claims, **characterised in that** the subscriber identification module (1) switches under its control from an unrestricted operating state and switches into a second restricted operating state (9) as a function of the result of the second authorisation procedure (A2) and/or other predefined independent variables.

11. Method according to claim 10, **characterised in that** the restricted operating state of the subscriber identification module (9) is **characterised by** predefined rules for accessing data and functions of the subscriber identification module.

12. Method according to any of claims 10 or 11, **characterised in that** the restricted operating state of the subscriber identification module (9) and/or the access mechanisms connected to the second authentication method (A2) are deactivatable by switching on and off the terminal device (3) operated by the subscriber identification module.

13. Method according to claim 4, **characterised in that** the access code (7) used in the second authentication procedure (A2) is unblockable by means of a predefined activity PUC, personal unblock code, (12).

14. Method according to any of claims 10 to 12, **characterised in that** transition from the unrestricted into the restricted operating state is triggered by means of card applications in accordance with a Java standard.

15. Method according to any of claims 10 to 12 or 14, **characterised in that** the subscriber identification module triggered by one or more of the following independent variables switches into its restricted operating state, wherein the manner of restriction is individually definable:
- expiry of a time interval;
- attainment of an absolute time and/or time;
- occurrence of a direct or delayed event;
- n times repetition of an event;
- arrival of a sequence of events.

16. Method according to any of claims 10 to 12, 14 or 15, **characterised in that** the restricted operating state of the subscriber identification module (9) is defined by one or more of the following functions:
- blockage of all calls;
- blockage of outgoing calls;
- blockage of incoming calls;
- blockage of SMS, EMS, MMS and/or USSD code;
- blockage of other data connections;
- blockage of all SIM functions;
- automatic dispatch of a message to a predetermined recipient about the reason or occasion for triggering the restricted operating state and/or about the current location of the terminal device (3).

17. Method according to any of the preceding claims, **characterised in that** the performance and function of the second authentication procedure (A2) is controllable by the following parameters definable by the users (5):
- switching the activity PIN (7) on and off;
- changing the activity PIN (7);
- defining the event for the transition into the restricted operating state;
- defining the available-functions in the restricted state;
- defining the type and content of the message to a predetermined recipient about the reason or occasion for triggering the restricted operating state.

18. Method according to claim 17, **characterised in that** the message is sent by telephone call or by short message service SMS, EMS, MMS or via a USSD code.

19. Chip card in the form of a subscriber identification module SIM (1) for use in mobile communications terminal devices (3) having means for carrying out a first authentication procedure (A1) which is optionally carried out prior to any use of the subscriber identification module and serves as an authenticity test on a user (5) with respect to the subscriber identification module (1), **characterised by** means for optionally carrying out a second authentication procedure (A2) which serves as an authenticity test of the user (5) with respect to the subscriber identification module (1) and is carried out automatically and repeatedly during use of the subscriber identification module (1).

20. Chip card according to claim 19, **characterised in that** a first access code (6) is assigned to the first authentication procedure (A1).

21. Chip card according to one of claims 19 or 20, **characterised in that** a second access code (7) is assigned to the second authentication procedure (A2).

22. Chip card according to one of claims 20 to 21, **characterised in that** the first and the second access code (6; 7) each consist of a personal identification number PIN.

23. Chip card according to any of claims 20 to 22, **characterised in that** the first and second access codes (6; 7) are identical.

24. Chip card according to any of claims 19 to 23, **characterised in that** it has an unrestricted and a restricted operating state, wherein the current operating state depends on the result of the first authentication procedure and/or the second authentication procedure (A2) and/or other predefined independent variables.

25. Chip card according to claim 24, **characterised in that** the restricted operating state of the subscriber identification module (9) is **characterised by** predefined rules for access to data and functions of the subscriber identification module.

## Revendications

1. Procédé pour améliorer la protection contre l'utilisation abusive d'une carte à puce sous forme de module d'identité d'abonné SIM (1) pour une utilisation des terminaux de communication mobile (3), selon lequel il est prévu une première procédure d'authentification (A1) qui est exécutée sélectivement avant chaque utilisation du module d'identité d'abonné (1) et qui sert à authentifier un utilisateur (5) par rapport au module d'identité d'abonné (1),
**caractérisé en ce qu'**il est prévu sélectivement une seconde procédure d'authentification (A2) qui sert à authentifier l'utilisateur (5) par rapport au module d'identité d'abonné (1) et qui est exécutée automatiquement et de manière répétée pendant l'utilisation du module (1).

2. Procédé selon la revendication 1, **caractérisé en ce que** la première procédure d'authentification (A1) nécessite l'entrée d'un premier code d'accès (6) par l'utilisateur, dont l'exactitude est vérifiée par le module d'identité d'abonné (1), un accès à ce module n'étant autorisé que si le résultat de la vérification est positif.

3. Procédé selon la revendication 2, **caractérisé en ce que** le premier code d'accès (6) est un code PIN standard dans le sens traditionnel.

4. Procédé selon l'une des revendications précédentes, **caractérisé en ce que** la seconde procédure d'authentification (A2) nécessite suivant une périodicité définie une nouvelle entrée d'un second code d'accès (7) par l'utilisateur, dont l'exactitude est vérifiée par le module d'identité d'abonné (1), un accès sans restriction à ce module (1) n'étant autorisé que si le résultat de la vérification est positif.

5. Procédé selon la revendication 4, **caractérisé en ce que** le second code d'accès (7) est un code PIN standard dans le sens traditionnel, ici dans la fonction d'un code "PIN d'activité".

6. Procédé selon l'une des revendications précédentes, **caractérisé en ce que** la première procédure d'authentification (A1) doit tout d'abord être exécutée, avant que la procédure d'authentification (A2) soit exécutée.

7. Procédé selon l'une des revendications précédentes, **caractérisé en ce que** la seconde procédure d'authentification (A2) est exécutée indépendamment de la première procédure d'authentification (A1).

8. Procédé selon l'une des revendications précédentes, **caractérisé en ce que** l'exécution de la seconde procédure d'authentification (A2) est activable/désactivable sélectivement par l'utilisateur (5).

9. Procédé selon la revendication 8, **caractérisé en ce que** l'accès à l'activation/désactivation sélective de la seconde procédure d'authentification (A2) n'est autorisé qu'après une exécution réussie de la première procédure d'authentification (A1).

10. Procédé selon l'une des revendications précédentes, **caractérisé en ce que** le module d'identité d'abonné (1) est autocontrôlé par un état de fonctionnement sans restriction et, en fonction du résultat de la seconde procédure d'authentification (A2) et/ou d'autres grandeurs d'influences prédéfinies, passe à un second état de fonctionnement (9) restreint.

11. Procédé selon la revendication 10, **caractérisé en ce que** l'état de fonctionnement restreint du module d'identité d'abonné (9) est **caractérisé par** des règles prédéfinies pour des accès à des données et à des fonctions dudit module d'identité d'abonné.

12. Procédé selon la revendication 10 ou 11, **caractérisé en ce que** l'état de fonctionnement restreint du module d'identité d'abonné (9) et/ou les mécanismes d'accès liés à la seconde procédure d'authentification (A2) sont aptes à être désactivés par la mise en marche et l'arrêt du terminal (3) qui fonctionne avec le module d'identité d'abonné.

13. Procédé selon la revendication 4, **caractérisé en ce que** le code d'accès (7) utilisé lors de la seconde procédure d'authentification (A2) est apte à être débloqué à l'aide d'un PUK d'activité (Personal Unblock Code) (12) prédéfini.

14. Procédé selon l'une des revendications 10 à 12, **caractérisé en ce que** le passage de l'état de fonctionnement sans restriction à l'état de fonctionnement restreint est déclenché à l'aide d'applications de carte selon une norme Java.

15. Procédé selon l'une des revendications 10 à 12 ou 14, **caractérisé en ce que** le module d'identité d'abonné, sous l'action de l'une au moins des grandeurs d'influence suivantes, passe à son état de fonctionnement restreint, le type de restriction pouvant être fixé individuellement :
- écoulement d'un laps de temps
- durée absolue atteinte et/ou durée
- apparition d'un événement direct ou différé
- n^{ème} répétition d'un événement
- survenue d'une suite d'événements.

16. Procédé selon l'une des revendications 10 à 12, 14 ou 15, **caractérisé en ce que** l'état de fonctionnement restreint du module d'identité d'abonné (9) est défini par l'une au moins des fonctions suivantes :
- blocage de tous les appels
- blocage des appels sortants
- blocage des appels entrants,
- blocage des SMS, EMS, MMS et/ou code USSD
- blocage d'autres liaisons de données
- blocage de toutes les fonctions du SIM
- envoi automatique d'un message à un destinataire prédéfini au préalable, sur la cause ou le motif du déclenchement de l'état de fonctionnement restreint et/ou sur l'endroit où se trouve actuellement le terminal (3).

17. Procédé selon l'une des revendications précédentes, **caractérisé en ce que** l'exécution et la fonction de la seconde procédure d'authentification (A2) sont aptes à être commandées par les paramètres suivants, aptes à être fixés par l'utilisateur (5) :
- mise en marche et arrêt du code PIN d'activité (7)
- modification du code PIN d'activité (7)
- définition de l'événement pour le passage à l'état de fonctionnement restreint
- définition des fonctions disponibles dans l'état restreint
- définition du type et du contenu du message adressé à un destinataire défini au préalable, sur la cause ou le motif du déclenchement de l'état de fonctionnement restreint.

18. Procédé selon la revendication 17, **caractérisé en ce que** le message est envoyé par appel ou par service de messages courts SMS, EMS, MMS ou d'un code USSD.

19. Carte à puce sous forme de module d'identité d'abonné SIM (1) pour une utilisation des terminaux de communication mobile (3), avec des moyens pour exécuter une première procédure d'authentification (A1) qui est exécutée sélectivement avant chaque utilisation du module d'identité d'abonné et qui sert à authentifier un utilisateur (5) par rapport à ce module (1), **caractérisée par** des moyens pour exécuter sélectivement une seconde procédure d'authentification (A2) qui sert à authentifier l'utilisateur (5) par rapport au module d'identité d'abonné (1) et qui est exécutée automatiquement et de manière répétée pendant l'utilisation du module (1).

20. Carte à puce selon la revendication 19, **caractérisée en ce qu'**un premier code d'accès (6) est associé à la première procédure d'authentification (A1).

21. Carte à puce selon la revendication 19 ou 20, **caractérisée en ce qu'**un second code d'accès (7) est associé à la seconde procédure d'authentification (A2).

22. Carte à puce selon l'une des revendications 20 à 21, **caractérisée en ce que** le premier et le second code d'accès (6 ; 7) se composent chacun d'un numéro d'identification personnel PIN.

23. Carte à puce selon l'une des revendications 20 à 22, **caractérisée en ce que** le premier et le second code d'accès (6 ; 7) sont identiques.

24. Carte à puce selon l'une des revendications 19 à 23, **caractérisée en ce qu'**elle comporte un état de fonctionnement sans restriction et un état de fonctionnement restreint, l'état de fonctionnement actuel dépendant du résultat de la première procédure d'authentification et/ou de la seconde procédure d'authentification (A2) et/ou d'autres grandeurs d'influence prédéfinies.

25. Carte à puce selon la revendication 24, **caractérisée en ce que** l'état de fonctionnement restreint du module d'identité d'abonné (9) est **caractérisé par** des règles prédéfinies pour des accès à des données et à des fonctions du module d'identité d'abonné.
